# EUROPÄISCHE PATENTSCHRIFT

(11) **EP 3 702 108 B1**
(45) Veröffentlichungstag und Bekanntmachung des Hinweises auf die Patenterteilung: **11.06.2025**
(21) Anmeldenummer: 19159749.1
(22) Anmeldetag: 27.02.2019
(51) Int. Cl.: B25J 9/16

(54) **VERFAHREN UND VORRICHTUNG ZUM ERMITTELN EINER GREIFPOSITION ZUM ERGREIFEN EINES WERKSTÜCKS**
METHOD AND APPARATUS FOR DETERMINING A GRIPPING POSITION FOR GRIPPING A WORKPIECE
PROCÉDÉ ET APPAREIL DE DÉTERMINATION D'UNE POSITION DE PRÉHENSION PERMETTANT DE SAISIR UNE PIÈCE À USINER

(43) Veröffentlichungstag der Anmeldung: 02.09.2020
(73) Patentinhaber: DMG MORI Bielefeld GmbH, 33689 Bielefeld (DE)
(72) Erfinder: Wissbrock, Timo, D-33813 Oerlingshausen (DE); Muhle, Daniel, D-42049 Herford (DE)
(74) Vertreter: MERH-IP Matias Erny Reichl Hoffmann Patentanwälte PartG mbB

(56) Entgegenhaltungen:
- EP-A2- 3 020 516
- DE-A1- 102016 224 377
- US-A1- 2017 223 279

## Beschreibung

Die vorliegende Erfindung betrifft ein Verfahren zum Ermitteln einer Greifposition zum Ergreifen eines Werkstücks. Des Weiteren betrifft die vorliegende Erfindung eine Vorrichtung zum Ermitteln einer Greifposition zum Ergreifen eines Werkstücks sowie ein Verfahren zum Greifen eines Werkstücks.

### HINTERGRUND DER ERFINDUNG

Das automatische Beladen einer Werkzeugmaschine mit Werkstücken gehört zu den Möglichkeiten, den Automatisierungsgrad der Produktion zu erhöhen. Hierbei ist es jedoch häufig eine Herausforderung für ein solches automatisiertes Belade-System, dass fortlaufend neue kundenspezifische Werkstücke angelernt werden müssen.

Neben dem Erfassen der 3D-Geometrie des Werkstücks müssen hierzu mögliche Greifpositionen eines Greifers/Roboters definiert werden, mit denen das Werkstück gegriffen werden kann.

Derzeit benötigen dafür derartige Belade-Systeme, a) die Geometrie des Werkstücks (z.B. aus CAD-Daten) und b) die Geometrie des Greifers (z.B. aus dem Robotermodell). Das Definieren der möglichen Greifpositionen erfolgt dann z.B. auf Basis des CAD Modells innerhalb einer Software oder durch direktes Anfahren des Werkstücks mit dem Roboter und Abspeichern/Teachen der möglichen Greifpositionen.

So ist beispielsweise für das erstgenannte Vorgehen in der DE 10 2016 224377 A1 ein Verfahren zum Greifen eines Objekts, insbesondere eines Karosserieteils, gezeigt, bei dem CAD-Modell-Daten für das zu greifende Objekt in eine Steuerungseinheit eingelesen werden und daraus durch automatische Analyse theoretische Greifpunkte des Objekts bestimmt werden.

EP 3 020 516 A2 offenbart das letztgenannte Vorgehen.

Insbesondere das Teachen (Anlernen) mittels direktem Anfahren der verschiedenen Greifpositionen kann dabei nachteilig sein, da dem jeweiligen Greifer/Roboter durch mehrere anleitende Schritte das Werkstück beigebracht werden muss, bevor er das Werkstück aus den verschiedenen möglichen Positionen heraus greifen kann. Teilweise muss dafür ein solcher Greifvorgang Schritt für Schritt "durchgespielt" und die entsprechend eingenommenen Positionen und Relativlagen des Werkstücks und des Roboters zueinander abgespeichert werden.

Da derartig aufwendige Teaching-Schritte aber die Rüstzeiten der Werkzeugmaschine teils deutlich erhöhen können, führen solche Teaching-Verfahren zu einer höheren Stillstandzeit der Werkzeugmaschine, wodurch der Einsatz von Robotern für die Effizienz der Bearbeitung trotz des höheren Automationsgrades, insbesondere bei kleineren Losgrößen von Werkstücken, schnell nachteilig werden kann.

### ZUSAMMENFASSUNG DER ERFINDUNG

Eine Aufgabe der vorliegenden Erfindung ist es daher, ein Verfahren zum Ermitteln einer Greifposition zum Ergreifen eines Werkstücks bereitzustellen, mit dem die oben genannten Nachteile vermieden werden.

Des Weiteren ist es Aufgabe der vorliegenden Erfindung, eine Vorrichtung zum Ermitteln einer Greifposition zum Ergreifen eines Werkstücks sowie ein Verfahren zum Greifen eines Werkstücks bereitzustellen.

Zur Lösung dieser Aufgabe wird daher ein Verfahren zum Ermitteln einer Greifposition nach Anspruch 1, eine Vorrichtung zum Ermitteln einer Greifposition nach Anspruch 6 und ein Verfahren zum Greifen eines Werkstücks nach Anspruch 9 vorgeschlagen. Die abhängigen Ansprüche beziehen sich auf vorteilhafte Ausführungsbeispiele der jeweiligen erfindungsgemäßen Verfahren und der erfindungsgemäßen Vorrichtung.

Das erfindungsgemäße Verfahren zum Ermitteln einer Greifposition zum Ergreifen eines Werkstücks, weist auf: Bereitstellen einer plattenförmigen Vorrichtung mit einer Projektion auf einer Oberfläche, die mindestens eine Bewegung von Greifelementen eines Greifers wiedergibt, wobei sich die Projektion farblich von der Oberfläche der plattenförmigen Vorrichtung unterscheidet und/oder Vertiefungen in der Oberfläche umfasst, Positionieren des Werkstücks in Bezug auf die plattenförmige Vorrichtung, dergestalt, dass eine Außenkontur des Werkstücks die Projektion der mindestens einen Bewegung der Greifelemente des Greifers schneidet, Erfassen von Schnittpunkten der Außenkontur des Werkstücks mit der Projektion der mindestens einen Bewegung der Greifelemente des Greifers, Erfassen einer Werkstückgeometrie des Werkstücks, welche die Außenkontur des Werkstücks umfasst, Abspeichern der erfassten Werkstückgeometrie und der erfassten Schnittpunkte der Außenkontur des Werkstücks mit der Projektion der mindestens einen Bewegung der Greifelemente des Greifers, Ermitteln der Greifposition zum Ergreifen des Werkstücks aus den erfassten Schnittpunkten, wobei auf Basis der erfassten Schnittpunkte der Außenkontur des Werkstücks mit der Projektion der mindestens einen Bewegung der Greifelemente des Greifers ein Werkstück-Koordinatensystem bestimmt wird, das die Greifposition zum Ergreifen des Werkstücks definiert, und eine Relation zwischen dem bestimmten Werkstück-Koordinatensystem und einem Greifer-Koordinatensystem des Greifers bestimmt wird und für das Werkstück abgespeichert wird

Durch das erfindungsgemäße Verfahren kann auf eine einfache Weise ein Werkzeug bereitgestellt werden, mittels dessen für die Wechseleinrichtung/Greifer neue bzw. unbekannte Werkstücke ohne Vorwissen zur Werkstück- und Greifergeometrie angelernt werden können.

Insbesondere ist dies vorteilhaft, da auf jegliche 3D-Modelle des Werkstücks und des Greifers verzichtet werden kann, um den Anlern-Vorgang durchzuführen. Weiterhin ist es von enormen Vorteil, dass für das Anlernen des neuen/unbekannten Werkstücks der Roboter bzw. der Greifer nicht benötigt wird und es dadurch zu keinen (zusätzlichen) Stillstandzeiten dieser Automationssysteme kommt.

Durch das erfindungsgemäße Verfahren kann das Werkstück bzw. seine Geometrie erfasst werden, was insbesondere für die Erkennung möglicher Greifpositionen und für das Wiedererkennen des Werkstücks/der Geometrie des Werkstücks wichtig ist.

Die Definition eines entsprechenden Werkstück-Koordinatensystem ermöglicht es dem Greifer, das Werkstück stets in der Lage/Position zu ergreifen, wie es dem Greifer angelernt wurde. Dabei wird das Greifer eigene Koordinatensystem (Greifer-Koordinatensystem) in die vorher definierte/angelernte Relation zu dem Werkstück-Koordinatensystem gebracht, bevor der Greifer "zugreift".

Weiterhin ist das erfindungsgemäße Verfahren vorteilhaft, da für verschiedene Greifpositionen des Werkstücks das erfindungsgemäße Verfahren einfach mehrfach angewendet werden kann, um dem Greifer sämtliche mögliche Greifpositionen an dem jeweiligen Werkstück anzulernen.

Die erfassten Daten werden abgespeichert, beispielsweise in eine dafür eingerichtete Speichereinheit, wobei diese Speichereinheit ebenfalls zentral vorhanden sein kann und darauf verschiedene Greifer bzw. Wechseleinrichtungen Zugriff haben können.

Das erfindungsgemäße Verfahren kann dadurch vorteilhaft weitergebildet werden, dass die Projektion der mindestens einen Bewegung der Greifelemente des Greifers ein lokales Koordinatensystem der plattenförmigen Vorrichtung definiert, wobei auf Basis des lokalen Koordinatensystems und der erfassten Werkstückgeometrie das Werkstück-Koordinatensystem bestimmt wird.

Zudem kann das erfindungsgemäße Verfahren dadurch vorteilhaft weitergebildet werden, dass das lokale Koordinatensystem im Wesentlichen zwischen den erfassten Schnittpunkten der Außenkontur des Werkstücks mit der Projektion der mindestens einen Bewegung der Greifelemente des Greifers definiert wird.

Die Projektion der mindestens einen Bewegung der Greifelemente des Greifers gibt ein lokales Koordinatensystem vor, aus dem heraus das Werkstück-Koordinatensystem unter Kenntnis der Werkstückgeometrie definiert werden kann. Dabei kann das lokale Koordinatensystem der plattenförmigen Vorrichtung im Wesentlichen zwischen den erfassten Schnittpunkten der Außenkontur des Werkstücks mit der Projektion der mindestens einen Bewegung der Greifelemente des Greifers liegen. Jedoch kann das lokale Koordinatensystem auch andere Positionen in Bezug auf die plattenförmige Vorrichtung und/oder das Werkstück einnehmen.

Das erfindungsgemäße Verfahren kann dadurch vorteilhaft weitergebildet werden, dass die erfassten Schnittpunkte im Wesentlichen Kontaktpunkte des Greifers sind, an denen das Werkstück durch den Greifer greifbar ist.

Vorteilhafterweise repräsentieren die erfassten Schnittpunkte im Wesentlichen Kontaktpunkte des Greifers, an denen das Werkstück durch den Greifer greifbar ist. Dadurch ist es beispielsweise für einen Werker/Benutzer sehr leicht zu erkennen, wo das jeweilige Werkstück durch den Greifer angegriffen werden würde und kann gegebenenfalls eine Korrektur der Kontaktpunkte durchführen, in dem er beispielsweise die Lage des Werkstücks gegenüber der plattenförmigen Vorrichtung ändert.

Weiterhin kann das erfindungsgemäße Verfahren dadurch vorteilhaft weitergebildet werden, dass die erfasste Werkstückgeometrie des Werkstücks zudem Folgendes umfasst: eine Höhe des in Bezug auf die plattenförmige Vorrichtung positionierten Werkstücks, und/oder einen Durchmesser, und/oder Form- Deskriptoren des Werkstücks.

Die verschiedenen Merkmale der erfassten Werkstückgeometrie können beispielsweise zum einen dafür genutzt werden, das Werkstück-Koordinatensystem zu definieren (beispielsweise durch die erfasste Höhe des Werkstücks in Bezug auf die plattenförmige Vorrichtung) oder um das Werkstück (sicherer) wiederzuerkennen. Die oben genannten Merkmale sollen dabei nicht als abschließend angesehen werden und können um weitere Merkmale ergänzt werden.

Das erfindungsgemäße Verfahren kann zudem dadurch vorteilhaft weitergebildet werden, dass die Projektion der mindestens einen Bewegung der Greifelemente des Greifers folgende Form aufweist: die Form einer Geraden, die Form zweier sich überkreuzender Geraden, die Form zweier Geraden, die sich senkrecht zueinander überkreuzen, die Form dreier aufeinander zulaufender und sich berührender Geraden, die Form dreier aufeinander zulaufender und sich berührender Geraden, die im Wesentlichen im gleichen Winkel zueinander stehen, und/oder eine Kombination aus zwei oder mehreren der genannten Formen.

Die erfindungsgemäße Vorrichtung zum Ermitteln einer Greifposition zum Ergreifen eines Werkstücks zur Verwendung in einem Verfahren zum Ermitteln einer Greifposition nach, weist auf: eine zum Ermitteln der Greifposition zum Ergreifen des Werkstücks eingerichteten Erfassungseinrichtung und eine plattenförmige Vorrichtung mit einer Projektion auf einer Oberfläche, die mindestens eine Bewegung von Greifelementen des Greifers wiedergibt, wobei sich die Projektion farblich von der Oberfläche der plattenförmigen Vorrichtung unterscheidet und/oder Vertiefungen in der Oberfläche umfasst, wobei die Erfassungsvorrichtung eingerichtet ist, eine Werkstückgeometrie eines auf der plattenförmigen Vorrichtung positionierten Werkstücks, die eine Außenkontur des Werkstücks umfasst, zu erfassen und abzuspeichern, Schnittpunkte der Außenkontur des Werkstücks mit der Projektion der mindestens einen Bewegung der Greifelemente des Greifers zu erfassen und abzuspeichern, und die Greifposition zum Ergreifen des Werkstücks aus den erfassten Schnittpunkten zu ermitteln, und dafür dazu eingerichtet ist, ein Werkstück-Koordinatensystem, das die Greifposition zum Ergreifen des Werkstücks definiert, auf Basis der erfassten Schnittpunkte der Außenkontur des Werkstücks mit der Projektion der mindestens einen Bewegung der Greifelemente des Greifers zu bestimmen, und eine Relation zwischen dem bestimmten Werkstück-Koordinatensystem und einem Greifer-Koordinatensystem des Greifer zu bestimmen und für das Werkstück abzuspeichern

Durch die erfindungsgemäße Vorrichtung konnte auf einfache Weise ein Mittel bereitgestellt werden, durch das neue bzw. unbekannte Werkstücke ohne Vorwissen zur Werkstück- und Greifergeometrie angelernt werden können, insbesondere da für das Anlernen des neuen/unbekannten Werkstücks der Roboter bzw. der Greifer nicht benötigt wird und es dadurch zu keinen (zusätzlichen) Stillstandzeiten dieser Automationssysteme kommt.

Durch die plattenförmige Vorrichtung ist es vorteilhaft möglich, diverse Werkstücke auf der die Projektion der mindestens einen Bewegung der Greifelemente des Greifers tragenden Oberfläche zu positionieren und den Anlern-Vorgang durchzuführen. Ferner ist eine plattenförmige Vorrichtung dahingehend vorteilhaft, da sie entweder stationär verwendet werden kann und/oder auch mobil zum jeweils gewünschten Ort gebracht werden kann.

Durch die die Projektion der mindestens einen Bewegung der Greifelemente des Greifers, die sich farblich von der Oberfläche der plattenförmigen Vorrichtung unterscheidet und/oder Vertiefungen in der Oberfläche umfasst, können 2D/3D-Kamerasysteme oder entsprechend eingerichtete Laser-Scanner zuverlässig die Projektion der Greifbewegung erfassen und entsprechend mit der erfassten Werkstückgeometrie verknüpfen.

Die erfindungsgemäße Vorrichtung kann dadurch vorteilhaft weitergebildet werden, dass die Projektion der mindestens einen Bewegung der Greifelemente des Greifers Nuten oder Rillen umfasst.

Die erfindungsgemäße Vorrichtung kann zudem dadurch vorteilhaft weitergebildet werden, dass die Projektion der mindestens einen Bewegung der Greifelemente des Greifers folgende Form aufweist: die Form einer Geraden, die Form zweier sich überkreuzender Geraden, die Form zweier Geraden, die sich senkrecht zueinander überkreuzen, die Form dreier aufeinander zulaufender und sich berührender Geraden, die Form dreier aufeinander zulaufender und sich berührender Geraden, die im Wesentlichen im gleichen Winkel zueinander stehen, und/oder eine Kombination aus zwei oder mehreren der genannten Formen.

Dabei sei an dieser Stelle darauf hingewiesen, dass die genannten Formen in keinster Weise einschränkend aufzufassen sind und durch weitere Formen ergänzt werden können, insbesondere durch Teile von den bereits genannten Formen.

Das erfindungsgemäße Verfahren zum Greifen eines Werkstücks weist auf: Bereitstellen des zu greifenden Werkstücks; Erfassen einer Außenkontur des Werkstücks; Erkennen der erfassten Außenkontur des Werkstücks auf Grundlage einer bekannten Außenkontur eines bekannten Werkstücks, wobei die bekannte Außenkontur des bekannten Werkstücks und die damit verknüpfte Greifposition zum Ergreifen des bekannten Werkstücks durch ein erfindungsgemäßes Verfahren zum Ermitteln einer Greifposition zum Greifen eines Werkstücks erfasst werden; und Greifen des Werkstücks durch einen Greifer anhand der erkannten Außenkontur des Werkstücks und der damit verknüpften Greifposition zum Ergreifen des Werkstücks.

Durch die Verwendung des erfindungsgemäßen Verfahrens zum Ermitteln einer Greifposition zum Greifen eines Werkstücks konnte ein einfaches und universell für jedes Werkstück und für jede Wechseleinrichtung/Greifer nutzbares Werkzeug bereitgestellt werden, um Wechseleinrichtungen bzw. Greifern wie beispielsweise einem Robotergreifer noch unbekannte Werkstücke anzulernen. Dabei ist es insbesondere von Vorteil, dass hierzu weder der Greifer oder der Roboter selbst, noch beispielsweise die entsprechende Werkzeugmaschine beansprucht werden müssen, um den Anlern-Prozess durchzuführen. Hierfür bedarf es lediglich der erfindungsgemäßen Vorrichtung zum Ermitteln einer Greifposition zum Greifen des Werkstücks, so dass mit Hilfe dieser Vorrichtung und einer Erfassungseinrichtung wie beispielsweise eine 3D-Kamera der Anlernprozess durchgeführt werden kann. Die dadurch erzeugten Daten wie Werkstückgeometrie und die entsprechenden Greifpositionen können abgespeichert werden und für die jeweilige Wechseleinrichtung abgerufen und verwendet werden.

Weitere Aspekte und deren Vorteile als auch Vorteile und speziellere Ausführungsmöglichkeiten der vorstehend beschriebenen Aspekte und Merkmale werden aus den folgenden, jedoch in keiner Weise einschränkend aufzufassenden Beschreibungen und Erläuterungen zu den angehängten Figuren beschrieben.

### KURZBESCHREIBUNG DER FIGUREN

- Fig. 1: zeigt schematisch eine Ausführungsform der erfindungsgemäßen Vorrichtung mit einer Projektion einen Bewegung der Greifelemente des Greifers und einem Werkstück;
- Fig. 2: zeigt schematisch eine Ausführungsform der erfindungsgemäßen Vorrichtung als transportable Vorrichtung (rechte Seite) und als fest installierte Vorrichtung (linke Seite);
- Fig. 3: zeigt ein Ablaufdiagramm eines Ausführungsbeispiels des erfindungsgemäßen Verfahrens zum Ermitteln einer Greifposition zum Ergreifen eines Werkstücks;
- Fig. 4: zeigt schematisch das Erfassen des Werkstücks in Relation zu der erfindungsgemäßen Vorrichtung durch eine Erfassungseinrichtung zur Bestimmung eines Werkstück-Koordinatensystems;
- Fig. 5: zeigt schematisch verschiedene Werkstücke wie sie beispielhaft in Relation zu der erfindungsgemäßen Vorrichtung positioniert sind und dabei die Projektion der Bewegung der Greifelemente des Greifers schneiden;
- Fig. 6: zeigt schematisch eine Vielzahl verschiedener und teilweise miteinander kombinierter Projektionen von Bewegungen der Greifelemente des Greifers, die auf der erfindungsgemäßen Vorrichtung vorgesehen sein können;
- Fig. 7: zeigt schematisch eine Wechseleinrichtung zum Greifen eines Werkstücks von einer Palette.

### DETAILLIERTE BESCHREIBUNG DER FIGUREN UND BEVORZUGTER AUSFÜHRUNGSBEISPIELE DER VORLIEGENDEN ERFINDUNG

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

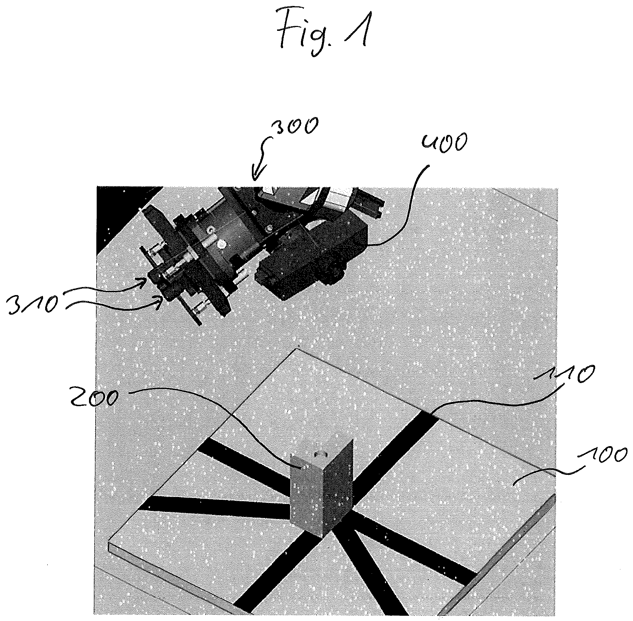

Fig. 1 zeigt schematisch eine Ausführungsform der erfindungsgemäßen Vorrichtung 100 mit einer Projektion 110 einer Bewegung von Greifelementen 310 des Greifers 300 und einem Werkstück 200.

Dabei ist das Werkstück 200 derart gegenüber der Vorrichtung 100 positioniert, dass es die Projektion 110 der Greifbewegung (=Bewegung von Greifelementen 310 des Greifers 300) schneidet. Dies ist insbesondere dadurch möglich, da die Vorrichtung 100 als Platte 100 bzw. plattenförmig ausgeführt ist und die Projektion 110 der Greifbewegung auf mindestens einer der Oberflächen der Vorrichtung 100 (im Folgenden teilweise auch als Platte 100 bezeichnet) als farblicher Unterschied zu dem Rest der Platte 100 und/oder durch Vertiefungen (wie beispielsweise Nuten und/oder Rillen etc.) in der Oberfläche der Platte 100 ausgeformt ist.

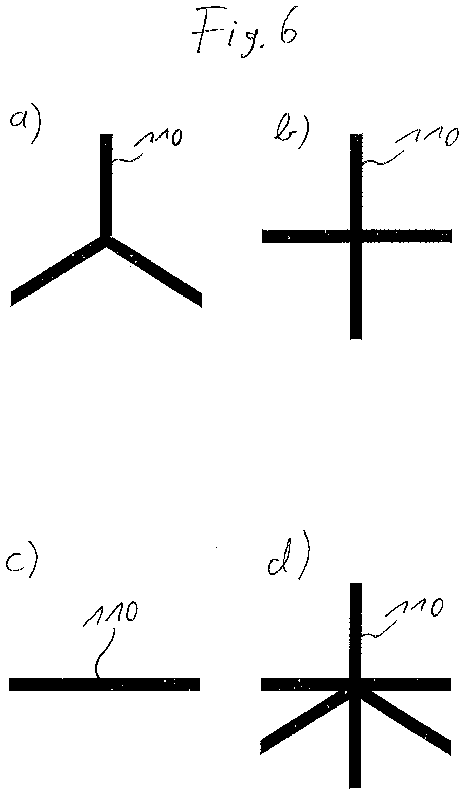

Hinzu kommt, dass die Projektion 110 der Greifbewegung die Bewegung von Greifelementen 310 eines Greifers 300 (Wechseleinrichtung) wiedergibt, die die Greifelemente 310 des Greifers 300 beim Greifen oder beim Loslassen vollziehen. Da es sich häufig um Zwei-Finger-Greifer oder Drei-Finger-Greifer (oder auch Mehr-Finger-Greifer) handelt, sind entsprechend die Projektionen 110 der Bewegung der einzelnen Finger (Greifelemente 310) auf der Oberfläche der Platte 100 als Paar (beispielsweise in Form einer geraden Linie) oder aber als Tripel (beispielsweise in Form von drei in einem Punkt zusammenlaufenden Linien, eventuell mit gleichem Winkel zueinander) ausgeführt. Es sei an dieser Stelle hierfür bereits auf die Ausführungen zu Fig. 6 verwiesen.

Ferner ist für das Erfassen der Geometrie des Werkstücks 200 und dessen Schnittpunkte mit der Projektion 110 der Greifbewegung eine Erfassungseinrichtung 400 vorgesehen. Die Erfassungseinrichtung 400 kann dabei als 2D/3D-Kameramesssystem oder als Laserscanner ausgebildet sein. Es können aber ebenso noch andere Ausführungsformen der Erfassungseinrichtung 400 verwendet werden als die genannten Möglichkeiten.

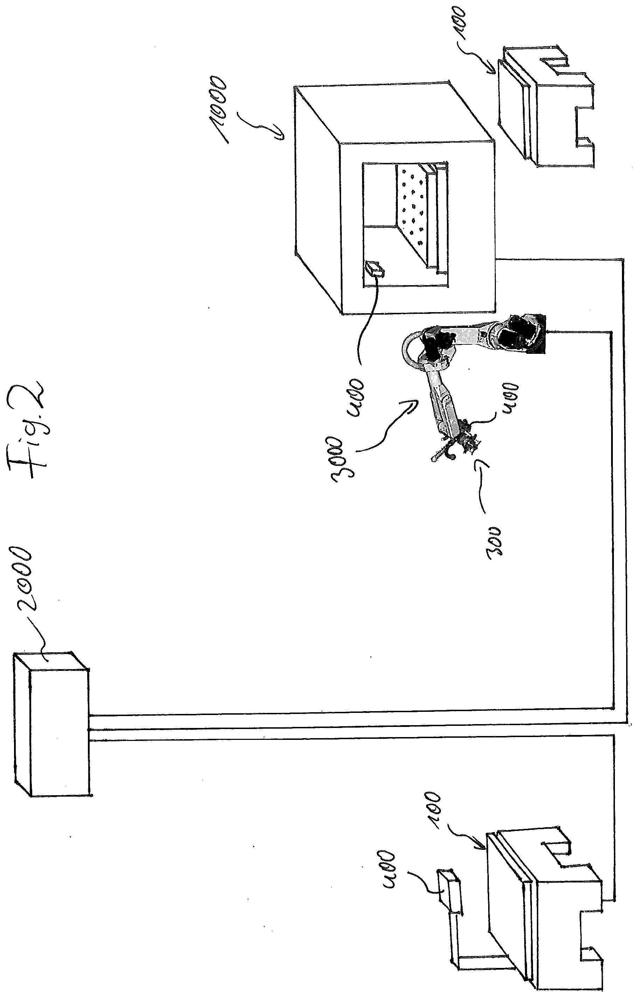

Die Erfassungseinrichtung 400 kann das Werkstück 200 sowie die Schnittpunkte der Projektion 110 der Greifbewegung mit dem Werkstück 200 einscannen und entsprechend in Daten umwandeln, die für eine Maschinensteuerung verwertbar sind, und diese gegebenenfalls in einer entsprechenden Speichereinheit 2000 (hier nicht gezeigt, siehe hierfür Fig. 2) abspeichern.

Fig. 2 zeigt schematisch eine Ausführungsform der erfindungsgemäßen Vorrichtung (Platte 100) als transportable Vorrichtung (sieh hierzu die rechte Seite der Fig. 2) und als fest installierte Vorrichtung (siehe hierzu die linke Seite der Fig. 2), wie sie beispielsweise in einer Werkhalle/Fertigungshalle verwendet werden kann.

Insbesondere vorteilhaft ist es, wenn die Platte 100 (wie auf der rechten Seite der Fig. 2 dargestellt) gegenüber der Werkzeugmaschine 1000 und/oder gegenüber dem Greifer 300 bzw. dem Roboter 3000 beweglich bzw. transportierbar ist, damit sie an verschiedenen Robotern 3000 bzw. Bearbeitungsplätzen verwendet werden kann. Dies ist insbesondere dadurch möglich, dass die Platte 100 für einen Maschinenbediener/Werker per Hand tragbar sein kann, die Platte 100 also in ihren Ausmaßen und in ihrem Gewicht nicht übermäßig ausgestaltet ist. Ferner kann die Platte 100 aber auch auf einem tragbaren Podest (wie in Fig. 2 abgebildet) vorgesehen sein, welches entsprechend im Bewegungsbereich des Roboters 3000 positioniert werden kann.

Die entsprechende Erfassung der Kontur des Werkstücks 200 und der Projektion 110 der Greifbewegung kann dann beispielsweise mittels der Erfassungseinrichtung 400 des Roboters 3000 oder einer beweglichen Erfassungseinrichtung 400 (hier nicht gezeigt) erfolgen.

Es kann aber ebenfalls sehr vorteilhaft sein, wenn das erfindungsgemäße Verfahren zum Ermitteln einer Greifposition mittels der erfindungsgemäßen Vorrichtung (Platte 100) immer an ein und demselben Ort stattfindet (wie auf der linken Seite der Fig. 2 dargestellt), und die daraus gewonnen Daten beispielsweise in einer zentralen Speichereinheit 2000 abgelegt/abgespeichert werden, worauf beispielsweise verschiedene Roboter innerhalb eines Unternehmens/einer Fertigungshalle zugreifen können.

Hierdurch können alle Fertigungs-/Bearbeitungsstationen die Bearbeitung fortsetzen, während parallel dazu weitere Werkstücke 200 und ihre möglichen Greifpositionen zum Greifen des Werkstücks 200 erfasst werden und diese Daten (zentral) abgespeichert werden.

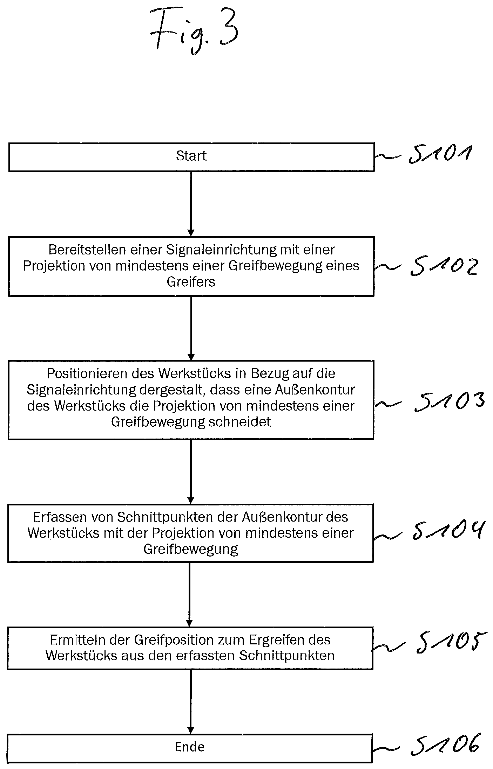

Fig. 3 zeigt ein Ablaufdiagramm eines Ausführungsbeispiels des erfindungsgemäßen Verfahrens zum Ermitteln einer Greifposition zum Ergreifen eines Werkstücks.

Dabei erfolgt zunächst ein Bereitstellen (Schritt S102) eine plattenförmige Vorrichtung (Platte 100) mit einer Projektion 110 von mindestens einer Greifbewegung eines Greifers 300, um das Anlernen des für den Greifer 300 noch unbekannten Werkstücks 200 durchzuführen.

Im darauffolgenden Schritt (S103) erfolgt das Positionieren des Werkstücks 200 in Bezug auf die plattenförmige Vorrichtung (Platte 100) dergestalt, dass eine Außenkontur des Werkstücks 200 die Projektion 110 von mindestens einer Greifbewegung schneidet.

Dies ist daher wichtig, um mögliche Kontaktpunkte des Greifers 300 zum Greifen des Werkstücks 200 erfassbar zu machen. Weiterhin ist dadurch dem Benutzer/Werker möglich zu erkennen, wo der Greifer 300 das Werkstück 200 greifen würde und kann hier gegebenenfalls eine Korrektur durchführen.

Nun erfolgt das Erfassen (Schritt S104) von Schnittpunkten der Außenkontur des Werkstücks 200 mit der Projektion 110 von mindestens einer Greifbewegung, um die Kontaktpunkte des Greifers 300 mit dem Werkstück 200 festzulegen.

Im Anschluss daran erfolgt das Ermitteln der Greifposition zum Ergreifen des Werkstücks 200 aus den erfassten Schnittpunkten, so dass der Greifer 300 das Werkstück 200 greifen kann.

Die vorgenannten Schritte können dabei beliebig oft wiederholt werden, je nach dem, wie viele Greifpositionen dem Greifer 300 für das entsprechende Werkstück 200 angelernt werden sollen.

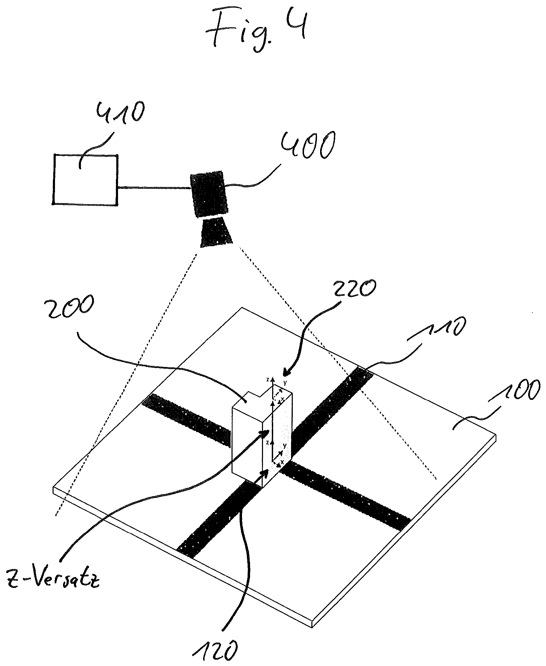

Fig. 4 zeigt schematisch das Erfassen des Werkstücks 200 in Relation zu der erfindungsgemäßen Vorrichtung (Platte 100) durch die Erfassungseinrichtung 400 zur Bestimmung eines Werkstück-Koordinatensystems 220.

Dabei wird im Wesentlichen von einem lokalen Koordinatensystem 120 der Platte 100 ausgegangen, um das Werkstück-Koordinatensystem 220 zu bestimmen. Dies erfolgt beim Erfassen der Außenkontur des Werkstücks 200 und der auf der Oberfläche der Platte 100 befindlichen Projektion 110 der Greifbewegung mittels der Erfassungseinrichtung 400.

Die Projektion 110 gibt hierfür im Wesentlichen die Lage des lokalen Koordinatensystems 120 vor. Beispielsweise kann das lokale Koordinatensystem 120 relativ mittig auf der Oberfläche der Platte 100 vorgesehen sein, insbesondere in Verbindung mit der Projektion 110 der Greifbewegung. So kann, wie in Fig. 4 gezeigt, beispielsweise das lokale Koordinatensystem 120 im Schnittpunkt der beiden Geraden der Projektion 110 der Greifbewegung liegen, oder aber, wenn beispielsweise nur eine Gerade als Projektion 110 auf der Oberfläche der Platte 100 vorhanden ist, mittig auf der Projektion 110 und/oder mittig auf der Platte 100 vorgesehen sein.

Ferner kann das lokale Koordinatensystem 120 aber auch auf Basis der Schnittpunkte der Außenkontur des Werkstücks 200 mit der Projektion 110 der Greifbewegung (die Schnittpunkte definieren dabei gleichzeitig die Punkte zum Greifen des Werkstücks 200 durch die Greifelemente 310) und gegebenenfalls in Verbindung mit der Lage der Projektion 110 der Greifbewegung auf der Oberfläche der Platte 100 definiert werden.

Sind nun die Außenkontur des Werkstücks 200 und das lokale Koordinatensystem 120 erfasst, kann auf Basis der erfassten Höhe des Werkstücks 200 (wie in Fig. 4 gezeigt in z-Richtung) ein z-Versatz stattfinden, so dass das lokale Koordinatensystem 120 von der Oberfläche der Platte 100 auf die obere Seite des Werkstücks 200 verschoben wird. Dies kann beispielsweise in einer Steuerungseinheit 410 der Erfassungseinrichtung 400 stattfinden.

Das so verschobene lokale Koordinatensystem 120 ergibt das Werkstück-Koordinatensystem 220, auf Basis dessen der Greifer 300 in Relation zu dem Werkstück 200 gebracht/verfahren werden kann, um das Werkstück 200 zu greifen. Das im Greifer 300 vorliegende Greifer-Koordinatensystem wird in Relation zu dem definierten Werkstück-Koordinatensystem 220 gesetzt und diese Relation für das entsprechende Werkstück 200 bzw. für die entsprechende Lage des Werkstücks 200 abgespeichert. Wird nun ein Werkstück 200 bzw. eine Kontur eines Werkstücks 200 wiedererkannt, so kann der Greifer 300 entsprechend gegenüber dem erkannten Werkstück 200 (auf Basis der gespeicherten Relation von Werkstück-Koordinatensystem 220 und Greifer-Koordinatensystem) positioniert werden.

Es können auch weitere Eigenschaften und geometrische Details des Werkstücks 200, neben den bereits genannten Eigenschaften der Höhe und der Kontur des Werkstücks 200, erfasst werden, wie beispielsweise ein Durchmesser des Werkstücks 200, oder aber bestimmte Shape Deskriptoren des Werkstücks 200 etc.

Diese können für die spätere Wiedererkennung des Werkstücks 200 durch die Erfassungseinrichtung 400 und für die entsprechende Zuordnung der gewünschten Greifpositionen durch die Greifelemente 310 von Bedeutung sein.

Zudem ist es von Vorteil, wenn das Erfassen der Schnittpunkte der Außenkontur des Werkstücks 200 mit der Projektion 110 der Greifbewegung für verschiedene Lagen des Werkstücks 200 auf der Oberfläche der Platte 100 stattfindet, da beispielsweise nicht ausgeschlossen sein kann, dass das Werkstück 200, anstatt hochkant auf der Oberfläche der Platte 100 (wie in Fig. 4 gezeigt), auf der Seite liegen kann, so dass hier gegebenenfalls andere Punkte zum Greifen des Werkstücks 200 durch die Greifelemente 310 zu definieren/zu bestimmen sind.

Daher ist es von Vorteil, wenn das erfindungsgemäße Verfahren zum Erfassen einer Greifposition jeweils für mehrere verschiedene Lagen oder für mehrere gewünschte Greifpositionen durchgeführt wird.

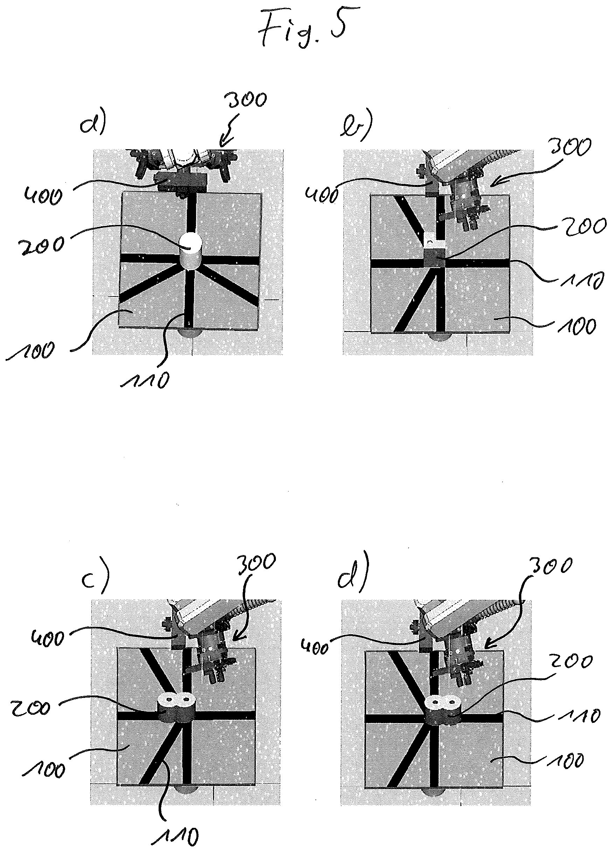

Fig. 5 zeigt schematisch verschiedene Werkstücke 200 wie sie beispielhaft in Relation zu der erfindungsgemäßen Vorrichtung (Platte 100) positioniert sind und dabei die Projektion 110 der Greifbewegung schneiden.

Abbildung a) zeigt dabei ein zylindrisches Werkstück 200, das im Wesentlichen mittig auf der Platte 100 im Schnittpunkt der Geraden der Projektion 110 der Greifbewegung platziert ist. Nun kann die Erfassungseinrichtung 400, die in diesem Beispiel direkt am Greifer 300 vorgesehen ist, das Werkstück 200 (samt Kontur und weiterer geometrischer Details) sowie die Projektion 110 der Greifbewegung erfassen und entsprechend einen z-Versatz für das Festlegen/Definieren des Werkstück-Koordinatensystems 220 durchführen, anhand dessen der Greifer 300 das Werkstück 200 greifen kann.

Abbildungen b) bis d) zeigen nun weitere beispielshafte Werkstückformen, wobei die Abbildungen c) und d) das gleiche Werkstück 200 zeigen, jedoch die relative Lage des Werkstücks 200 gegenüber der Projektion 110 der Greifbewegung bzw. gegenüber der Platte 100 unterschiedlich ist. Dabei ist es stets dem Benutzer überlassen, wie er das Werkstück 200 auf der Platte 100 positioniert und dadurch die Greifposition(en) beeinflusst.

In allen Fällen erfolgt, wie unter Abbildung a) beschrieben, das Erfassen der für die Definition der Greifposition erforderlichen Merkmale des Werkstücks 200 und der Projektion 110 der Greifbewegung.

Fig. 6 zeigt schematisch eine Vielzahl verschiedener und teilweise miteinander kombinierter Projektionen 110 von Greifbewegungen, die auf der erfindungsgemäßen Vorrichtung (Platte 100) vorgesehen sein können.

Dabei zeigt Abbildung a) ein Tripel aus drei aufeinander zulaufenden und sich in einem Punkt treffenden Geraden, was beispielhaft die Greifbewegung eines Drei-Finger-Greifers charakterisiert. Derartige Greifer können insbesondere für zylindrische Werkstücke 200 verwendet werden, da durch die drei Kontaktpunkte an der Außenfläche des zylindrischen Werkstücks 200 ein sicheres Greifen ermöglicht wird. Hier kann beispielsweise das lokale Koordinatensystem 120 der Platte 100 im Wesentlichen mittig im Schnittpunkt der drei Geraden liegen.

Abbildung b) zeigt nun eine Überkreuzung aus zwei Geraden, die im konkreten Beispiel im Wesentlichen senkrecht zueinanderstehen, jedoch aber auch andere relative Lagen zueinander einnehmen können. Dabei können die zwei Geraden die Greifbewegung eines Vier-Finger-Greifers charakterisieren, um beispielsweise möglichst viele Punkte zum Greifen des Werkstücks 200 zu nutzen, wie es bei schweren Werkstücken von Vorteil sein kann oder um einen stabilen Transport des Werkstücks 200 ohne Lageveränderung des Werkstücks 200 gegenüber dem Greifer 300 zu gewährleisten. Das lokale Koordinatensystem 120 der Platte 100 kann beispielsweise im Wesentlichen mittig im Schnittpunkt der zwei Geraden liegen.

Die zwei überkreuzten Geraden können aber auch für einen Zwei-Finger-Greifer genutzt werden, der das Werkstück 200 von zwei verschiedenen Seiten/Richtungen aus greifen kann. Die Erfassungseinrichtung 400 würde die Schnittpunkte zwischen Außenkontur des Werkstücks 200 (beispielsweise einen Würfel, der mittig auf dem Kreuzungspunkt der Geraden steht) und der Projektion 110 der Greifbewegung erkennen und könnte nun für den Greifer 300 zwei unterschiedliche Möglichkeiten zum Greifen des Werkstücks 200 auf Basis des Werkstück-Koordinatensystems 220 definieren.

Abbildung c) zeigt nun eine Gerade, wobei hier im Wesentlichen die Greifbewegung eines Zwei-Finger-Greifers charakterisiert wird. Hier kann beispielsweise das lokale Koordinatensystem 120 der Platte 100 im Wesentlichen mittig auf der Geraden liegen.

Abbildung d) zeigt nun eine Kombination aus allen drei vorgenannten Projektionen 110 von Greifbewegungen, wobei auch hier das lokale Koordinatensystem 120 der Platte 100 beispielsweise im Wesentlichen mittig in dem gemeinsamen Schnittpunkt der Geraden liegen kann. Diese Ausführungsform der Projektion 110 der Greifbewegung ist insbesondere deshalb vorteilhaft, da hier sämtliche Ausgestaltungen von Greifbewegungen bzw. sämtliche Typen von Greifern 300 auf einer Platte 100 repräsentiert sein können und nicht für jeden Greifertyp eine separate Platte 100 bzw. separate Projektion 110 der Greifbewegung erforderlich ist.

Es sei an dieser Stelle darauf hingewiesen, dass die genannten bzw. die gezeigten Projektionen 110 der Greifbewegung nicht einschränkend aufzufassend sind, sondern durch weitere Möglichkeiten von Greifbewegungen ergänzt werden können, insbesondere auch aus Teilbewegungen der bisher genannten/gezeigten Greifbewegungen.

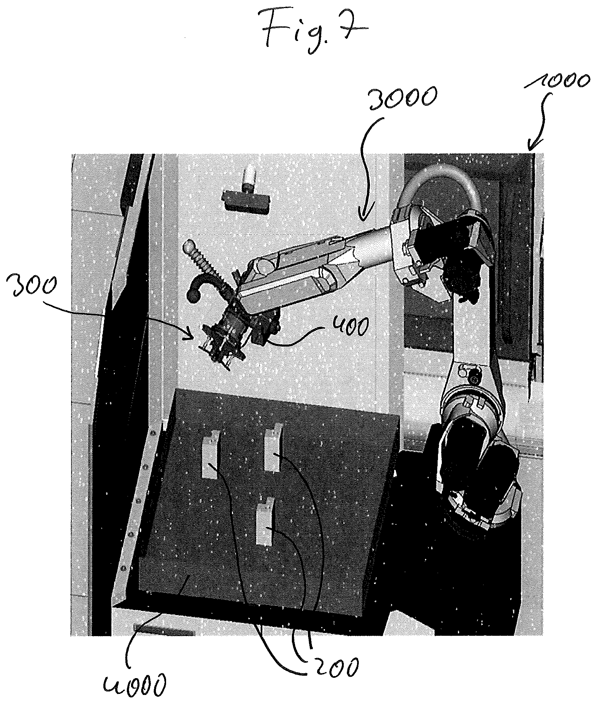

Fig. 7 zeigt schematisch eine Wechseleinrichtung (Greifer 300) an einem Roboter 3000 zum Greifen eines Werkstücks 200 von einer Palette 4000.

Dabei wird eins der drei auf der Palette 4000 vorhandenen Werkstücks 200 durch den Roboter 3000 beispielhaft in die Werkzeugmaschine 1000 eingesetzt, wobei das Werkstück 200 bzw. die Kontur des Werkstücks 200 vorher durch das erfindungsgemäße Verfahren zum Erfassen einer Greifposition dem Roboter 3000 angelernt wurde.

Zunächst wird das Werkstück 200, insbesondere seine Außenkontur durch die Erfassungseinrichtung 400 erfasst und mit bereits bekannten, gegebenenfalls in einer Speichereinheit 2000 (hier nicht gezeigt, siehe hierfür Fig. 2) abgespeicherten Werkstücken/Konturen verglichen. Ist das Werkstück 200 bzw. die Kontur des Werkstücks 200 bekannt, so erkennt eine Steuerungseinrichtung (beispielsweise die Steuerungseinheit 410 der Erfassungseinrichtung 400) das vorliegende Werkstück 200.

Danach wird der Greifer 300 (insbesondere das Greifer-Koordinatensystem) in die für das Greifen des erkannten Werkstücks 200 erforderliche Relation zu dem Werkstück-Koordinatensystem 220 gebracht (beispielsweise durch Verschieben und/oder Drehen des Greifers 300 gegenüber dem Werkstück 200), bis das Werkstück-Koordinatensystem 220 und das Greifer-Koordinatensystem die erforderliche Relation zueinander eingenommen haben. Danach kann das eigentliche Greifen des jeweiligen Werkstücks 200 erfolgen und die Greifelemente 310 (wie in Fig. 1 beschrieben) können sich schließen.

Das nun gegriffene Werkstück 200 kann jetzt durch den Roboter zu der Werkzeugmaschine 1000 transportiert und dort eingesetzt werden. Es sei jedoch an dieser Stelle darauf hingewiesen, dass das beschriebene Greifen des Werkstücks 200 nicht auf eine Palette 4000 beschränkt ist. Werkstücke 200 können von beliebigen Flächen (z.B. von einem Förderband etc.) oder aus beliebigen Behältern (z.B. Gitterboxen etc.) gegriffen werden. Auch können die gegriffenen Werkstücke 200 in eine andere Vorrichtung als eine Werkzeugmaschine 1000 eingesetzt werden, sie können beispielsweise umgelagert werden oder einfach nur sortiert werden.

Vorstehend wurden Beispiele bzw. Ausführungsbeispiele der vorliegenden Erfindung sowie deren Vorteile detailliert unter Bezugnahme auf die beigefügten Figuren beschrieben.

Es sei erneut hervorgehoben, dass die vorliegende Erfindung jedoch in keiner Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

### LISTE DER BEZUGSZEICHEN

- 100: Platte
- **110**: Projektion der Greifbewegung (Bewegung von Greifelementen 310 des Greifers 300)
- **120**: lokales Koordinatensystem der Platte
- **200**: Werkstück
- **220**: Werkstück-Koordinatensystem
- 300: Greifer
- 310: Greifelemente
- **400**: Erfassungseinrichtung
- **410**: Steuerungseinheit
- 1000: Werkzeugmaschine
- 2000: Speichereinheit
- **3000**: Roboter/Wechseleinrichtung
- **4000**: Palette

## Patentansprüche

1. Verfahren zum Ermitteln einer Greifposition zum Ergreifen eines Werkstücks (200),
**gekennzeichnet durch** die Schritte:
- Bereitstellen einer plattenförmigen Vorrichtung (100) mit einer Projektion (110) auf einer Oberfläche, die mindestens eine Bewegung von Greifelementen (310) eines Greifers (300) wiedergibt, wobei sich die Projektion (110) farblich von der Oberfläche der plattenförmigen Vorrichtung (100) unterscheidet und/oder Vertiefungen in der Oberfläche umfasst;
- Positionieren des Werkstücks (200) in Bezug auf die plattenförmige Vorrichtung (100) dergestalt, dass eine Außenkontur des Werkstücks (200) die Projektion (110) der mindestens einen Bewegung der Greifelemente (310) des Greifers (300) schneidet;
- Erfassen einer Werkstückgeometrie des Werkstücks (200), umfassend die Außenkontur des Werkstücks (200);
- Erfassen von Schnittpunkten der Außenkontur des Werkstücks (200) mit der Projektion (110) der mindestens einen Bewegung der Greifelemente (310) des Greifers (300);
- Abspeichern der erfassten Werkstückgeometrie und der erfassten Schnittpunkte der Außenkontur des Werkstücks (200) mit der Projektion (110) der mindestens einen Bewegung der Greifelemente (300) des Greifers (310);
- Ermitteln der Greifposition zum Ergreifen des Werkstücks (200) aus den erfassten Schnittpunkten,
wobei auf Basis der erfassten Schnittpunkte der Außenkontur des Werkstücks (200) mit der Projektion (110) der mindestens einen Bewegung der Greifelemente (310) des Greifers (300) ein Werkstück-Koordinatensystem (220) bestimmt wird, das die Greifposition zum Ergreifen des Werkstücks (200) definiert, und eine Relation zwischen dem bestimmten Werkstück-Koordinatensystem (220) und einem Greifer-Koordinatensystem (300) des Greifers (300) bestimmt wird und für das Werkstück (300) abgespeichert wird.

2. Verfahren nach Anspruch 1, **dadurch gekennzeichnet, dass**
die Projektion (110) der mindestens einen Bewegung der Greifelemente (310) des Greifers (300) ein lokales Koordinatensystem (120) der plattenförmigen Vorrichtung (100) definiert, wobei auf Basis des lokalen Koordinatensystems (120) und der erfassten Werkstückgeometrie das Werkstück-Koordinatensystem (220) bestimmt wird.

3. Verfahren nach Anspruch 2, **dadurch gekennzeichnet, dass**
das lokale Koordinatensystem (120) zwischen den erfassten Schnittpunkten der Außenkontur des Werkstücks (200) mit der Projektion (110) der mindestens einen Bewegung der Greifelemente (310) des Greifers (300) definiert wird.

4. Verfahren nach einem der vorstehenden Ansprüche, **dadurch gekennzeichnet, dass**
die erfassten Schnittpunkte Kontaktpunkte des Greifers (300) sind, an denen das Werkstück durch den Greifer (300) greifbar ist.

5. Verfahren nach einem der vorstehenden Ansprüche, **dadurch gekennzeichnet, dass**
die erfasste Werkstückgeometrie des Werkstücks (200) Folgendes umfasst:
eine Höhe des in Bezug auf die plattenförmige Vorrichtung (100) positionierten Werkstücks (200), und/oder
einen Durchmesser, und/oder
Form Deskriptoren des Werkstücks (200).

6. Vorrichtung zum Ermitteln einer Greifposition zum Ergreifen eines Werkstücks (200) zur Verwendung in einem Verfahren nach einem der Ansprüche 1 bis 5 mit einer zum Ermitteln der Greifposition zum Ergreifen des Werkstücks (200) eingerichteten Erfassungseinrichtung (400),
**gekennzeichnet durch**:
- eine plattenförmige Vorrichtung (100) mit einer Projektion (110) auf einer Oberfläche, die mindestens eine Bewegung von Greifelementen (310) des Greifers (300) wiedergibt, wobei sich die Projektion (110) farblich von der Oberfläche der plattenförmigen Vorrichtung (100) unterscheidet und/oder Vertiefungen in der Oberfläche umfasst;
wobei die Erfassungsvorrichtung (400) eingerichtet ist,
eine Werkstückgeometrie eines auf der plattenförmigen Vorrichtung (100) positionierten Werkstücks (200), die eine Außenkontur des Werkstücks (200) umfasst, zu erfassen und abzuspeichern,
Schnittpunkte der Außenkontur des Werkstücks (200) mit der Projektion (110) der mindestens einen Bewegung der Greifelemente (310) des Greifers (300) zu erfassen und abzuspeichern,
und die Greifposition zum Ergreifen des Werkstücks (200) aus den erfassten Schnittpunkten zu ermitteln, und dafür dazu eingerichtet ist, ein Werkstück-Koordinatensystem (220), das die Greifposition zum Ergreifen des Werkstücks (200) definiert, auf Basis der erfassten Schnittpunkte der Außenkontur des Werkstücks (200) mit der Projektion (110) der mindestens einen Bewegung der Greifelemente (310) des Greifers (300) zu bestimmen, und eine Relation zwischen dem bestimmten Werkstück-Koordinatensystem (220) und einem Greifer-Koordinatensystem (300) des Greifers (300) zu bestimmen und für das Werkstück (300) abzuspeichern.

7. Vorrichtung nach Anspruch 6, **dadurch gekennzeichnet, dass**
die Projektion (110) der mindestens einen Bewegung der Greifelemente (310) des Greifers (300) Nuten oder Rillen umfasst.

8. Vorrichtung nach einem der Ansprüche 6 bis 7, **dadurch gekennzeichnet, dass** die Projektion (110) der mindestens einen Bewegung der Greifelemente (310) des Greifers (300) folgende Form aufweist:
die Form einer Geraden,
die Form zweier sich überkreuzender Geraden,
die Form zweier Geraden, die sich senkrecht zueinander überkreuzen,
die Form dreier aufeinander zulaufender und sich berührender Geraden,
die Form dreier aufeinander zulaufender und sich berührender Geraden, die im Wesentlichen im gleichen Winkel zueinander stehen, und/oder
eine Kombination aus zwei oder mehreren der genannten Formen.

9. Verfahren zum Greifen eines Werkstücks (200), mit:
- Bereitstellen des zu greifenden Werkstücks (200);
- Erfassen einer Außenkontur des Werkstücks (200);
- Erkennen der erfassten Außenkontur des Werkstücks (200) auf Grundlage einer bekannten Außenkontur eines bekannten Werkstücks, wobei die bekannte Außenkontur des bekannten Werkstücks und die damit verknüpfte Greifposition zum Ergreifen des bekannten Werkstücks durch ein Verfahren nach einem der Ansprüche 1 bis 5 erfasst werden; und
- Greifen des Werkstücks (200) durch einen Greifer (300) anhand der erkannten Außenkontur des Werkstücks (200) und der damit verknüpften Greifposition zum Ergreifen des Werkstücks.

## Claims

1. Method for determining a gripping position for gripping a workpiece (200), **characterized by** the steps:
- providing a plate-shaped device (100) having a projection (110) on a surface which reflects at least one movement of gripping elements (310) of a gripper (300), wherein the projection (110) differs in color from the surface of the plate-shaped device (100) and/or comprises depressions in the surface;
- positioning the workpiece (200) in relation to the plate-shaped device (100) such that an outer contour of the workpiece (200) intersects the projection (110) of the at least one movement of the gripping elements (310) of the gripper (300);
- detecting a workpiece geometry of the workpiece (200), comprising the outer contour of the workpiece (200);
- detecting intersection points of the outer contour of the workpiece (200) with the projection (110) of the at least one movement of the gripping elements (310) of the gripper (300);
- storing the detected workpiece geometry and the detected intersection points of the outer contour of the workpiece (200) with the projection (110) of the at least one movement of the gripping elements (310) of the gripper (300);
- determining the gripping position for gripping the workpiece (200) from the detected intersection points,
wherein a workpiece coordinate system (220), which defines the gripping position for gripping the workpiece (200), is determined on the basis of the detected intersection points of the outer contour of the workpiece (200) with the projection (110) of the at least one movement of the gripping elements (310) of the gripper (300), and a relation between the determined workpiece coordinate system (220) and a gripper coordinate system (300) of the gripper (300) is determined and stored for the workpiece (300).

2. Method according to Claim 1, **characterized in that**
the projection (110) of the at least one movement of the gripping elements (310) of the gripper (300) defines a local coordinate system (120) of the plate-shaped device (100), wherein the workpiece coordinate system (220) is determined on the basis of the local coordinate system (120) and the detected workpiece geometry.

3. Method according to Claim 2, **characterized in that**
the local coordinate system (120) is defined between the detected intersection points of the outer contour of the workpiece (200) with the projection (110) of the at least one movement of the gripping elements (310) of the gripper (300).

4. Method according to one of the preceding claims, **characterized in that**
the detected intersection points are contact points of the gripper (300) at which the workpiece can be gripped by the gripper (300).

5. Method according to one of the preceding claims, **characterized in that**
the detected workpiece geometry of the workpiece (200) comprises:
a height of the workpiece (200) positioned in relation to the plate-shaped device (100), and/or
a diameter, and/or
shape descriptors of the workpiece (200).

6. Device for determining a gripping position for gripping a workpiece (200) for use in a method according to one of Claims 1 to 5, having a detection device (400) which is set up to determine the gripping position for gripping the workpiece (200),
**characterized by**:
- a plate-shaped device (100) having a projection (110) on a surface which reflects at least one movement of gripping elements (310) of the gripper (300), wherein the projection (110) differs in color from the surface of the plate-shaped device (100) and/or comprises depressions in the surface;
wherein the detection device (400) is set up
to detect and store a workpiece geometry of a workpiece (200) which is positioned on the plate-shaped device (100) and comprises an outer contour of the workpiece (200),
to detect and store intersection points of the outer contour of the workpiece (200) with the projection (110) of the at least one movement of the gripping elements (310) of the gripper (300),
and to determine the gripping position for gripping the workpiece (200) from the detected intersection points, and is set up to determine a workpiece coordinate system (220), which defines the gripping position for gripping the workpiece (200), on the basis of the detected intersection points of the outer contour of the workpiece (200) with the projection (110) of the at least one movement of the gripping elements (310) of the gripper (300), and to determine a relation between the determined workpiece coordinate system (220) and a gripper coordinate system (300) of the gripper (300) and store for the workpiece (300).

7. Device according to Claim 6, **characterized in that**
the projection (110) of the at least one movement of the gripping elements (310) of the gripper (300) comprises grooves or grooves.

8. Device according to one of Claims 6 to 7, **characterized in that**
the projection (110) of the at least one movement of the gripping elements (310) of the gripper (300) has the following form:
the form of a straight line,
the form of two intersecting straight lines,
the form of two straight lines which intersect perpendicularly to one another,
the form of three straight lines which converge and touch one another,
the form of three straight lines which converge and touch one another and are substantially at the same angle to one another, and/or
a combination of two or more of said shapes.

9. Method for gripping a workpiece (200), comprising:
- providing the workpiece (200) to be gripped;
- detecting an outer contour of the workpiece (200);
- detecting the detected outer contour of the workpiece (200) on the basis of a known outer contour of a known workpiece, wherein the known outer contour of the known workpiece and the associated gripping position for gripping the known workpiece are detected by a method according to one of Claims 1 to 5; and
- gripping the workpiece (200) by a gripper (300) on the basis of the detected outer contour of the workpiece (200) and the associated gripping position for gripping the workpiece.

## Revendications

1. Procédé de détermination d'une position de préhension pour saisir une pièce (200),
**caractérisé par** les étapes suivantes :
- la fourniture d'un dispositif en forme de plaque (100) avec une projection (110) sur une surface qui représente au moins un mouvement d'éléments de préhension (310) d'un préhenseur (300), dans lequel la projection (110) diffère en couleur de la surface du dispositif en forme de plaque (100) et/ou comprend des creux dans la surface ;
- le positionnement de la pièce (200) par rapport au dispositif en forme de plaque (100) de telle sorte qu'un contour extérieur de la pièce (200) coupe la projection (110) de l'au moins un mouvement des éléments de préhension (310) du préhenseur (300) ;
- la détection d'une géométrie de pièce de la pièce (200) comprenant le contour extérieur de la pièce (200) ;
- la détection d'intersections du contour extérieur de la pièce (200) avec la projection (110) de l'au moins un mouvement des éléments de préhension (310) du préhenseur (300) ;
- la mémorisation de la géométrie de pièce détectée et des intersections détectées du contour extérieur de la pièce (200) avec la projection (110) de l'au moins un mouvement des éléments de préhension (310) du préhenseur (300) ;
- la détermination de la position de préhension pour saisir la pièce (200) à partir des intersections détectées,
un système de coordonnées de pièce (220) qui définit la position de préhension pour saisir la pièce (200) étant déterminé sur la base des intersections détectées du contour extérieur de la pièce (200) avec la projection (110) de l'au moins un mouvement des éléments de préhension (310) du préhenseur (300), et une relation entre le système de coordonnées de pièce (220) déterminé et un système de coordonnées de préhenseur (300) du préhenseur (300) étant déterminée et mémorisée pour la pièce (300).

2. Procédé selon la revendication 1, **caractérisé en ce que**
la projection (110) de l'au moins un mouvement des éléments de préhension (310) du préhenseur (300) définit un système de coordonnées local (120) du dispositif en forme de plaque (100), le système de coordonnées de pièce (220) étant déterminé sur la base du système de coordonnées local (120) et de la géométrie de pièce détectée.

3. Procédé selon la revendication 2, **caractérisé en ce que**
le système de coordonnées local (120) est défini entre les intersections détectées du contour extérieur de la pièce (200) avec la projection (110) de l'au moins un mouvement des éléments de préhension (310) du préhenseur (300).

4. Procédé selon l'une quelconque des revendications précédentes, **caractérisé en ce que**
les intersections détectées sont des points de contact du préhenseur (300) au niveau desquels la pièce peut être saisie par le préhenseur (300).

5. Procédé selon l'une quelconque des revendications précédentes, **caractérisé en ce que**
la géométrie de pièce détectée de la pièce (200) comprend :
une hauteur de la pièce (200) positionnée par rapport au dispositif en forme de plaque (100), et/ou
un diamètre, et/ou
des descripteurs de forme de la pièce (200).

6. Dispositif de détermination d'une position de préhension pour saisir une pièce (200) destiné à être utilisé dans un procédé selon l'une quelconque des revendications 1 à 5, comprenant un dispositif de détection (400) configuré pour déterminer la position de préhension pour saisir la pièce (200),
**caractérisé par** :
- un dispositif en forme de plaque (100) avec une projection (110) sur une surface qui représente au moins un mouvement d'éléments de préhension (310) du préhenseur (300), dans lequel la projection (110) diffère en couleur de la surface du dispositif en forme de plaque (100) et/ou comprend des creux dans la surface
dans lequel le dispositif de détection (400) est configuré pour
détecter et mémoriser une géométrie de pièce d'une pièce (200) positionnée sur le dispositif en forme de plaque (100) qui comprend un contour extérieur de la pièce (200),
détecter et mémoriser des intersections du contour extérieur de la pièce (200) avec la projection (110) de l'au moins un mouvement des éléments de préhension (310) du préhenseur (300),
et déterminer la position de préhension pour saisir la pièce (200) à partir des intersections détectées, et est configuré pour déterminer un système de coordonnées de pièce (220) qui définit la position de préhension pour saisir la pièce (200) sur la base des intersections détectées du contour extérieur de la pièce (200) avec la projection (110) de l'au moins un mouvement des éléments de préhension (310) du préhenseur (300), et déterminer une relation entre le système de coordonnées de pièce (220) déterminé et un système de coordonnées de préhenseur (300) du préhenseur (300) et mémoriser pour la pièce (300).

7. Dispositif selon la revendication 6, **caractérisé en ce que**
la projection (110) de l'au moins un mouvement des éléments de préhension (310) du préhenseur (300) comprend des rainures ou des rainures.

8. Dispositif selon l'une quelconque des revendications 6 à 7, **caractérisé en ce que** la projection (110) de l'au moins un mouvement des éléments de préhension (310) du préhenseur (300) présente la forme suivante :
la forme d'une droite,
la forme de deux droites se croisant,
la forme de deux droites se croisant perpendiculairement l'une à l'autre,
la forme de trois droites se touchant et convergeant l'une vers l'autre,
la forme de trois droites se touchant et convergeant l'une vers l'autre, qui forment sensiblement le même angle l'une par rapport à l'autre, et/ou
une combinaison de deux desdites formes ou plus.

9. Procédé de préhension d'une pièce (200), comprenant :
- la fourniture de la pièce (200) à saisir ;
- la détection d'un contour extérieur de la pièce (200) ;
- la reconnaissance du contour extérieur détecté de la pièce (200) sur la base d'un contour extérieur connu d'une pièce connue, le contour extérieur connu de la pièce connue et la position de préhension associée pour saisir la pièce connue étant détectés par un procédé selon l'une quelconque des revendications 1 à 5 ; et
- la préhension de la pièce (200) par un préhenseur (300) à l'aide du contour extérieur reconnu de la pièce (200) et de la position de préhension associée pour saisir la pièce.
